# EUROPÄISCHE PATENTSCHRIFT

(11) **EP 1 602 069 B1**
(45) Veröffentlichungstag und Bekanntmachung des Hinweises auf die Patenterteilung: **05.07.2006**
(21) Anmeldenummer: 04717061.8
(22) Anmeldetag: 04.03.2004
(51) Int. Cl.: G06K 19/077

(54) **BAUGRUPPE MIT EINER GEWICKELTEN DRAHTSPULE FÜR EINE RFID-TRANSPONDERKARTE UND RFID-TRANSPONDERKARTE MIT EINER SOLCHEN BAUGRUPPE**
MODULE COMPRISING A COILED WIRE-WOUND COIL FOR AN RFID-TRANSPONDER CARD AND RFID-TRANSPONDER CARD COMPRISING SAID MODULE
MODULE DOTE D'UNE BOBINE DE FIL ENROULE ET DESTINE A UNE CARTE DE TRANSPONDEUR RFID, ET CARTE DE TRANSPONDEUR RFID POURVUE D'UN MODULE DE CE TYPE

(30) Priorität: 05.03.2003 DE 10309800
(43) Veröffentlichungstag der Anmeldung: 07.12.2005
(73) Patentinhaber: Scattergood, Martin, 40489 Düsseldorf (DE)
(72) Erfinder: Scattergood, Martin, 40489 Düsseldorf (DE)
(74) Vertreter: Sparing Röhl Henseler Patentanwälte European Patent Attorneys
(86) Internationale Anmeldenummer: PCT/EP2004/002169
(87) Internationale Veröffentlichungsnummer: WO 2004/079646

(56) Entgegenhaltungen:
- EP-A- 0 708 414
- DE-A- 4 307 064
- GB-A- 2 371 263

## Beschreibung

Die Erfindung betrifft eine Baugruppe für eine RFID-Transponderkarte nach dem Oberbegriff des Anspruchs 1 und eine RFID-Transponderkarte nach dem Oberbegriff des Anspruchs 11.

Bekannte RFID-Transponderkarten, siehe z.B. GB-A-2 371 263, weisen eine in einem flachen Kartenkörper eingebettete Baugruppe aus einem Chip und einer Antenne in Form einer Spule auf. Für den 125 kHz Betrieb ist es bekannt, eine runde Spule aus einem Metalldraht zu verwenden, der in mehreren radial und axial benachbarten Windungen gewickelt ist und dessen Enden radial einwärts zeigend mit Kontaktflächen auf dem Chip verbunden sind und diesen tragen. Die Baugruppe wird in eine entsprechende Aussparung im Kartenkörper eingesetzt und der Zwischenraum zwischen Spule und Chip und Spule und Aussparung mit einem Füllmaterial aufgefüllt. Dies ist aufwendig und führt zudem zu wahrnehmbaren Erhabungen, die die Form der Windungen und des Chips erkennen lassen und nur mit hohem Aufwand vermeidbar sind. Zudem kann sich der Chip bei der Handhabung der Baugruppe leicht von der Spule lösen. Für den 13,56 MHz Betrieb sind RFID-Transponderkarten mit einer Baugruppe bekannt, bei der die Spule in Form von Leiterbahnen auf einer dünnen, flexiblen Trägerfolie ausgestaltet ist und der Chip in Flip-Chip-Technik mit Goldkontakthügeln der Trägerfolie verbunden ist. Allerdings ist die Herstellung derartiger Baugruppen aufwendig und teuer. Zudem führt der auf die Trägerfolie aufgesetzte Chip auch hier zu einer wahrnehmbaren Erhabung auf der Kartenoberfläche.

Der Erfindung liegt deshalb die Aufgabe zugrunde, eine Baugruppe für eine RFID-Transponderkarte nach dem Oberbegriff des Anspruchs 1 und eine RFID-Transponderkarte nach dem Oberbegriff des Anspruchs 11 zu schaffen, die vereinfacht herstellbar sind und eine glatte Kartenoberfläche ermöglichen.

Diese Aufgabe wird entsprechend den Merkmalen des kennzeichnenden Teils des Anspruchs 1 bzw. 11 gelöst.

Hierdurch wird eine Baugruppe für eine RFID-Transponderkarte geschaffen, die eine Spule aus in mehreren radial und axial benachbarten Windungen um einen flachen Träger gewickeltem Metalldraht und einen Chip in einer Durchlochung des Trägers derart umfaßt, daß weder der Chip noch die Windungen über die Oberflächen des Trägers hinausragen. Ferner wird eine RFID-Transponderkarte geschaffen, die die Baugruppe in einem insbesondere dreiteiligen Kartenkörper aufnimmt.

Die Baugruppe weist dabei eine im wesentlichen ebene Oberfläche auf, so daß eine RFID-Transponderkarte mit einer glatten Oberfläche ohne Verwendung von Füllmaterial erreichbar ist. Zudem fixiert die Durchlochung den Chip in seiner Position, wodurch einem unbeabsichtigten Lösen des Chips aus der Baugruppe entgegengewirkt wird. Dadurch vereinfacht sich die Handhabung der Baugruppe und folglich die Herstellung der RFID-Transponderkarte.

Die Windungen und/oder der Chip können bündig mit der Ober- und/oder der Unterseite des Trägers ausgestaltet sein. Der Träger weist dadurch eine gleichmäßigere Oberfläche auf und ist mit dünneren Kartenkörpern für die RFID-Transponderkarte verwendbar.

Es kann eine umlaufende Nut am Rand des Trägers vorgesehen sein. Dadurch sind die Windungen einfacher auf den Träger aufbringbar und weisen einen erhöhten Widerstand gegen versehentliches seitliches Abstreifen beim Hantieren auf.

Die Durchlochung ist vorzugsweise benachbart zum Rand des Trägers angeordnet. Hierdurch können die Enden der Spule kurz gehalten werden.

Es kann eine mittige Durchlochung vorgesehen sein, mit welcher der Träger zum Aufwickeln des Metalldrahtes auf einen Stift einer Wickelvorrichtung aufsteckbar ist. Hierdurch wird eine einfache und kostengünstige Herstellung ermöglicht.

Der Träger ist vorzugsweise im wesentlichen rechteckig und weist abgerundete Ecken auf. Hierdurch ist er unter maximaler Flächenausnutzung für Karten insbesondere im Scheckkartenformat einsetzbar, wobei die abgerundeten Ecken eine Beschädigung der Wicklungen verhindern. Der Träger kann aber auch eine andere Formen aufweisen, insbesondere oval oder rund sein.

Als Material für den Träger werden vorzugsweise Kunststoff, Pappe oder ausreichend steifes Papier verwendet.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt eine Baugruppe mit einer Spule, einem Träger und einem Chip in Draufsicht.
Fig. 2 zeigt einen Schnitt durch eine RFID-Transponderkarte mit der Baugruppe aus Fig. 1.
Fig. 3 zeigt eine Wickelvorrichtung.

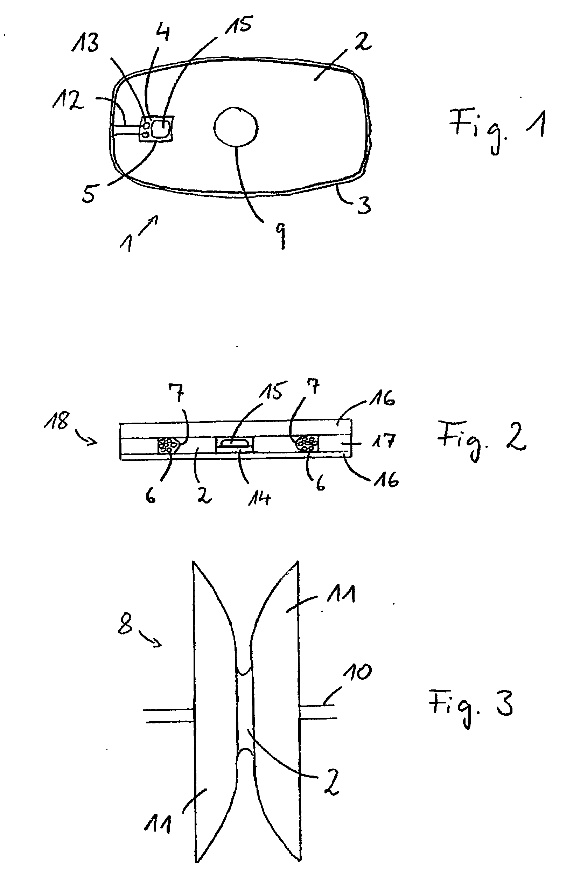

Die in Fig. 1 dargestellte Baugruppe 1 umfaßt einen flachen Träger 2, der hier einen im wesentlichen rechteckigen Querschnitt mit abgerundeten Ecken aufweist, eine Spule 3, die um den Rand des Trägers 2 gewickelt ist, und einen Chip 4, der in eine benachbart zum Rand des Trägers 2 vorgesehene Durchlochung 5 eingesetzt ist.

Die Spule 3 weist mehrere radial und axial benachbarte Windungen 6 aus Metalldraht auf, vgl. Fig. 2. Die Windungen 6 sind dabei ausreichend fest um den Träger 2 gewickelt und gegebenenfalls mit diesem verklebt, um nicht abzurutschen. Zudem kann am Rand des Trägers 2 eine umlaufende Nut 7 vorgesehen sein, in welche zumindest eine der Windungen 6 eingreift.

Zum Aufwickeln des Metalldrahts wird der Träger 2 an einer drehbaren Wickelvorrichtung 8 befestigt, vgl. Fig. 3. Hierzu kann der Träger 2 mit einer mittigen Durchlochung 9 auf einen Stift 10 der Wickelvorrichtung 8 aufgesteckt werden. Die Wickelvorrichtung 8 wird dann manuell oder machinell gedreht und der z.B. aus einer Haspel zugeführte Metalldraht entlang des Randes der Trägers 2 zu einer gewünschten Anzahl Windungen 6 aufgewickelt. Hierzu kann eine Zentriereinrichtung für den Metalldraht, z.B. aus zwei beidseitig gegen den Träger 2 geklemmten Hohlkugelabschnitten 11, vorgesehen sein. Zweckmäßigerweise werden die Windungen 6 anschließend miteinander und mit dem Träger 2 verklebt.

Die beiden Enden 12 der Spule 3 sind zweckmäßigerweise auf kürzestem Weg vom Rand des Trägers 2 zum Chip 4 geführt und dort mit Kontakten 13 elektrisch verbunden, insbesondere verlötet. Die Enden 12 können dabei wie dargestellt auf der Oberfläche des Trägers 2 angeordnet sein. Wegen des geringen Durchmessers des Metalldrahts sind die dadurch entstehenden Unebenheiten auf der Oberfläche des Trägers 2 vernachlässigbar gering. Gegebenenfalls kann für die Enden 12 eine kanalförmige Vertiefung auf dem Körper 2 vorgesehen sein, die sich vom Rand des Trägers 2 bis zur Durchlochung 5 erstreckt.

Der Chip 4 umfaßt vorzugsweise ein Trägermaterial 14, z.B. eine dünnen Epoxydharzplatine. Die Unterseite des Trägermaterials 14 ist hier plan und bündig mit dem Träger 2. Die Oberseite des Trägermaterials 14 ist zweckmäßigerweise bis auf die Kontakte 13 mit einer insbesondere im wesentlichen planen Isolierung 15 vergossen, die nicht über den Träger 2 hinausragt. Der Chip 4 kann mit Spiel oder zweckmäßigerweise klemmend in die Durchlochung 5 eingesetzt sein.

Die Baugruppe 1 ist wie in Fig. 2 gezeigt mit zwei Hälften 16 und einem Mittelteil 17 eines Kartenkörpers zu einer flachen RFID-Transponderkarte 18 verbindbar. Die Baugruppe 1 paßt dabei insbesondere saugend, d.h. spielfrei gleitend in das Mittelteil 17 und ist zusammen mit diesem mit den Hälften 16 verklebt. Sind die beiden Hälften 16 wie dargestellt verschieden dick, ist der Träger vorzugsweise so angeordnet, daß die plane Unterseite des Trägermaterials 14 der dünneren Hälfte zugewandt ist. Die gegebenenfalls vorhandene mittige Durchlochung 9 kann mit einem entsprechenden Einsatz verschlossen sein, der beidseitig bündig mit dem Träger 2 ist. Die Windungen 6 und/oder die den Windungen 6 gegenüberliegenden Kanten der Aussparung im Mittelteil 17 können verformbar ausgestaltet sein, um einen spaltlosen Sitz des Trägers 2 zu erleichtern. Das Mittelteil 17 kann auch einstückig mit einer der Hälften 16 ausgestaltet sein.

Der Metalldraht ist beispielsweise ein Kupferdraht und weist einen Durchmesser von etwa 0.01 bis 0.25 mm, vorzugsweise 0.05 bis 0.10 mm auf. Der Träger 2 ist ein hier in wesentlichen rechteckiger flacher Kunststoff- oder ausreichend steifer Papierabschnitt mit einer Dicke, die zumindest zwei axial benachbarte Windungen 6 aufnehmen kann. Vorzugsweise beträgt die Dicke nicht mehr als 0.25 mm. Die beiden Hälften 16 können z.B. aus Kunststoff sein oder Aufkleber oder Folien- oder Papierabschnitte, die gegebenenfalls durchfärbt oder auf ihrer freien Oberfläche bedruckt sind. Die RFID-Transponderkarte 18 ist damit im Scheckkartenformat herstellbar. Je nach Einsatzzweck können aber auch dickere und steifere Hälften 16 vorgesehen sein.

## Patentansprüche

1. Baugruppe (1) für eine RFID-Transponderkarte (18), mit einer Spule (3) aus in mehreren radial und axial benachbarten Windungen (6) gewickeltem Metalldraht und einem daran angeschlossenen Chip (4), **dadurch gekennzeichnet, daß** die Spule (3) um den Rand eines flachen Trägers (2) gewickelt ist, der eine Durchlochung (5) aufweist, in die der Chip (4) eingesetzt ist, und die Windungen (6) und der Chip (4) zwischen der Ober- und der Unterseite des Trägers (2) angeordnet sind.

2. Baugruppe nach Anspruch 1, **dadurch gekennzeichnet, daß** die Windungen (6) bündig mit der Ober- und/oder der Unterseite des Trägers (2) gewickelt sind.

3. Baugruppe nach Anspruch 1 oder 2, **dadurch gekennzeichnet, daß** eine Oberfläche des Chips (4) eben und bündig mit einer Oberfläche des Trägers (2) ist.

4. Baugruppe nach einem der Ansprüche 1 bis 3, **dadurch gekennzeichnet, daß** eine umlaufende Nut (7) am Rand des Trägers (2) vorgesehen ist.

5. Baugruppe nach einem der Ansprüche 1 bis 4, **dadurch gekennzeichnet, daß** der Chip (4) klemmend in die Durchlochung (5) eingesetzt ist.

6. Baugruppe nach einem der Ansprüche 1 bis 5, **dadurch gekennzeichnet, daß** die Durchlochung (5) benachbart zum Rand des Trägers (2) angeordnet ist.

7. Baugruppe nach einem der Ansprüche 1 bis 6, **dadurch gekennzeichnet, daß** eine mittige Durchlochung (9) vorgesehen ist.

8. Baugruppe nach einem der Ansprüche 1 bis 7, **dadurch gekennzeichnet, daß** der Träger (2) im wesentlichen rechteckig ist und abgerundete Ecken aufweist.

9. Baugruppe nach einem der Ansprüche 1 bis 8, **dadurch gekennzeichnet, daß** ein sich vom Rand des Trägers (2) bis zur Durchlochung (5) für den Chip (4) erstreckender Kanal vorgesehen ist, in dem die Spulenenden (12) angeordnet sind.

10. Baugruppe nach einem der Ansprüche 1 bis 9, **dadurch gekennzeichnet, daß** sie für den Betrieb bei 13,56 MHz ausgelegt ist.

11. RFID-Transponderkarte (18) mit einem Kartenkörper und einer darin eingeschlossenen Baugruppe (1), die eine Spule (3) aus in mehreren radial und axial benachbarten Windungen (6) gewickeltem Metalldraht und einen daran angeschlossenen Chip (4) aufweist, **dadurch gekennzeichnet, daß** die Baugruppe (1) nach einem der Ansprüche 1 bis 10 ausgestaltet ist.

12. Transponderkarte nach Anspruch 11, **dadurch gekennzeichnet, daß** der Kartenkörper (2) zwei Hälften (16) und ein Mittelteil (17) mit einer Aussparung für die Baugruppe (1) umfaßt.

13. Transponderkarte nach Anspruch 11 oder 12, **dadurch gekennzeichnet, daß** die Baugruppe (1) saugend in das Mittelteil (17) eingesetzt ist.

14. Transponderkarte nach einem der Ansprüche 11 bis 13, **dadurch gekennzeichnet, daß** beide Oberflächen der Transponderkarte (18) glatt sind.

## Claims

1. Module (1) for an RFID transponder card (18), with a coil (3) comprising metal wire wound in a number of radially and axially adjacent windings (6) and a chip (4) connected to it, **characterized in that** the coil (3) is wound around the edge of a flat carrier (2), which has an aperture (5) in which the chip (4) is fitted, and the windings (6) and the chip (4) are arranged between the upper side and the underside of the carrier (2).

2. Module according to Claim 1, **characterized in that** the windings (6) are wound flush with the upper side and/or the underside of the carrier (2).

3. Module according to Claim 1 or 2, **characterized in that** a surface of the chip (4) is planar and flush with a surface of the carrier (2).

4. Module according to one of Claims 1 to 3, **characterized in that** a peripheral groove (7) is provided at the edge of the carrier (2).

5. Module according to one of Claims 1 to 4, **characterized in that** the chip (4) is tightly fitted in the aperture (5).

6. Module according to one of Claims 1 to 5, **characterized in that** the aperture (5) is arranged adjacent to the edge of the carrier (2).

7. Module according to one of Claims 1 to 6, **characterized in that** a central aperture (9) is provided.

8. Module according to one of Claims 1 to 7, **characterized in that** the carrier (2) is substantially rectangular and has rounded corners.

9. Module according to one of Claims 1 to 8, **characterized in that** a channel is provided, extending from the edge of the carrier (2) to the aperture (5) for the chip (4) and accommodating the ends of the coil (12).

10. Module according to one of Claims 1 to 9, **characterized in that** it is designed for operation at 13.56 MHz.

11. RFID transponder card (18) with a card body and a module (1) enclosed therein, which has a coil (3) comprising metal wire wound in a number of radially and axially adjacent windings (6) and a chip (4) connected to it, **characterized in that** the module (1) is designed according to one of Claims 1 to 10.

12. Transponder card according to Claim 11, **characterized in that** the card body (2) comprises two halves (16) and a central part (17) with a clearance for the module (1).

13. Transponder card according to Claim 11 or 12, **characterized in that** the module (1) is snugly fitted in the central part (17).

14. Transponder card according to one of Claims 11 to 13, **characterized in that** both surfaces of the transponder card (18) are smooth.

## Revendications

1. Module (1) pour une carte de transpondeur RFID (18), comportant une bobine (3) constituée d'un fil métallique enroulé en plusieurs spires (6) adjacentes radialement et axialement, et une puce (4) reliée à celui-ci, **caractérisé en ce que** la bobine (3) est enroulée autour du bord d'un support plat (2), lequel présente un trou traversant (5), dans lequel est insérée la puce (4) et les spires (6) et la puce (4) sont disposées entre les faces supérieure et inférieure du support (2).

2. Module selon la revendication 1, **caractérisé en ce que** les spires (6) sont enroulées au ras de la face supérieure et/ou inférieure du support (2).

3. Module selon l'une quelconque des revendications 1 ou 2, **caractérisé en ce qu'**une surface de la puce (4) est plane et au ras d'une surface du support (2).

4. Module selon l'une quelconque des revendications 1 à 3, **caractérisé en ce qu'**une rainure périphérique (7) est prévue au bord du support (2).

5. Module selon l'une quelconque des revendications 1 à 4, **caractérisé en ce que** la puce (4) est insérée en étant calée dans le trou traversant (5).

6. Module selon l'une quelconque des revendications 1 à 5, **caractérisé en ce que** le trou traversant (5) est disposé de manière adjacente au bord du support (2).

7. Module selon l'une quelconque des revendications 1 à 6, **caractérisé en ce qu'**il est prévu un trou traversant central (9).

8. Module selon l'une quelconque des revendications 1 à 7, **caractérisé en ce que** le support (2) est sensiblement rectangulaire et présente des angles arrondis.

9. Module selon l'une quelconque des revendications 1 à 8, **caractérisé en ce qu'**il est prévu un canal s'étendant à partir du bord du support (2) jusqu'au trou traversant (5) pour la puce (4), dans lequel canal sont disposées les extrémités des bobines (12).

10. Module selon l'une quelconque des revendications 1 à 9, **caractérisé en ce qu'**il est adapté à un fonctionnement à 13,56 MHz.

11. Carte de transpondeur RFID (18) comportant un corps de carte et un module (1) intégré dans celui-ci, qui comporte une bobine (3) constituée d'un fil métallique enroulé en plusieurs spires (6) adjacentes axialement et radialement, et une puce (4) reliée à celui-ci, **caractérisée en ce que** le module (1) est configuré selon l'une quelconque des revendications 1 à 10.

12. Carte de transpondeur selon la revendication 11, **caractérisée en ce que** le corps de carte (2) comporte deux moitiés (16) et un élément central (17) présentant un évidement pour le module (1).

13. Carte de transpondeur selon l'une quelconque des revendications 11 ou 12, **caractérisée en ce que** le module (1) est inséré par aspiration dans l'élément central (17).

14. Carte de transpondeur selon l'une quelconque de revendications 11 à 13, **caractérisée en ce que** les deux surfaces de la carte de transpondeur (18) sont lisses.
